# EUROPÄISCHE PATENTSCHRIFT

(11) **EP 2 170 530 B1**
(45) Veröffentlichungstag und Bekanntmachung des Hinweises auf die Patenterteilung: **10.09.2014**
(21) Anmeldenummer: 08774570.9
(22) Anmeldetag: 01.07.2008
(51) Int. Cl.: C09D 5/08, C09D 153/00, B05D 3/02, B05D 5/00, B05D 7/14

(54) **VERFAHREN ZUR KORROSIONSSCHUTZBEHANDLUNG VON METALLOBERFLÄCHEN**
PROCESS FOR THE CORROSION PROTECTION TREATMENT OF METAL SURFACES
PROCÉDÉ DE TRAITEMENT ANTICORROSION DE SURFACES MÉTALLIQUES

(30) Priorität: 20.07.2007 DE 102007034473; 30.10.2007 DE 102007052069
(43) Veröffentlichungstag der Anmeldung: 07.04.2010
(73) Patentinhaber: TESA SE, 20253 Hamburg (DE)
(72) Erfinder: STRICKER, Rainer, 08525 Plauen (DE)
(86) Internationale Anmeldenummer: PCT/EP2008/058420
(87) Internationale Veröffentlichungsnummer: WO 2009/013098

(56) Entgegenhaltungen:
- EP-A- 1 726 456
- DE-A1- 10 106 474
- JP-A- 11 012 554
- JP-A- 59 010 372

## Beschreibung

Die vorliegende Erfindung betrifft ein Verfahren zur Korrosionsschutzbehandlung von Metalloberflächen mit den Merkmalen des Oberbegriffs von Anspruch 1.

Metallbauteile werden in vielfältigen Bereichen eingesetzt. Dabei werden sie den unterschiedlichsten Witterungsbedingungen ausgesetzt, so dass oftmals eine Korrosionsschutzbehandlung erforderlich ist. Hierzu sind insbesondere für einen vollflächigen Auftrag einer Korrosionsschutzschicht auf Metallbauteile verschiedene Verfahren bekannt. Die DE 10 2006 006 910 B3 offenbart beispielsweise ein Verfahren, bei dem auf die zu schützenden Metalloberflächen eine Korrosionsschutzschicht in Form einer Zinklammelenbeschichtung aufgebracht wird. Die Aufbringung der Zinklamellenbeschichtung erfolgt mittels eines Tauch- oder Sprühverfahrens. Bei einem weiteren aus dem Stand der Technik bekannten Verfahren erfolgt eine Korrosionsschutzbehandiung durch Eintauchen der Metalloberflächen in einen kathodisch abscheidbaren Elektrotauchlack (DE 10 2005 059 314 A1). Den beiden zuvor genannten Verfahren ist gemeinsam, dass die Korrosionsschutzschicht auf eine relativ große Fläche, insbesondere vollflächig, auf die zu behandelnde Metalloberfläche aufgebracht wird.

Insbesondere in der Automobilindustrie besteht jedoch die Notwendigkeit auch kleine Flächen, nämlich die Oberfläche von Kanten und Übergängen von Metallbauteilen, vor Korrosion durch eine Korrosionsschutzschicht zu schützen. Hierzu wird in der Regel eine Feinnahtabdichtung manuell oder mittels eines Roboters aufgebracht. Als Material für die Feinnaht wird üblicherweise pumpbares PVC verwendet. Dieses wird lokal auf die Metalloberfläche aufgesprüht und anschließend mittels eines Pinsels glatt gestrichen. Bei diesem Verfahren, dass grundsätzlich für Kanten und Übergänge geeignet ist, ist es schwierig die Feinnaht In der im Fahrzeugbau erforderlichen optischen Güte zu erstellen.

Vielmehr bleibt die Oberfläche oftmals rau und ein ungleichmäßiger Auftrag ist mit bloßem Auge erkennbar.

Aus der JP 59 010 372 A ist ein Korrosionsschutzverfahren für Kanten von lackierten Stahlteilen unter Verwendung einer nicht-schmelzbaren selbstklebenden Masse bekannt.

Der vorliegenden Erfindung liegt daher das Problem zugrunde, ein Verfahren zur Korrosionsschutzbehandlung von Metalloberflächen anzugeben, das ohne großen Aufwand durchführbar und insbesondere auch zum Schutz von Kanten und Übergängen von Metallbauteilen eingesetzt werden kann.

Das zuvor aufgezeigte Problem wird bei einem Verfahren zur Korrosionsschutzbehandlung von Metalloberflächen mit den Merkmalen des Oberbegriffs von Anspruch 1 durch die Merkmale des kennzeichnenden Teils von Anspruch 1 gelöst. Vorteilhafte Ausgestaltungen und Weiterbildungen sind Gegenstand der Unteransprüche.

Erfindungsgemäß wurde zunächst erkannt, dass selbstklebende Massen bei entsprechender Behandlung eine gute Korrosionsschutzschicht auf Metalloberflächen ausbilden und demgemäß zur Korrosionsschutzbehandlung geeignet sind. Bei Versuchen konnte zudem gezeigt werden, dass mittels geeigneter selbstklebender Massen glatte Oberflächen ausgebildet werden können. Derartige glatte Oberflächen weisen für einen Betrachter mit bloßem Auge eine gleichmäßige Oberflächenstruktur auf und sind dabei eben. Die Verwendung einer selbstklebenden Masse zur Ausbildung einer Korrosionsschutzschicht auf Metalloberflächen ist wegen der einfachen Handhabung besonders vorteilhaft. Aufgrund der selbstklebenden Wirkung kann die Masse besonders einfach auf die Oberflächen aufgebracht und dort vor weiteren Prozessschritten vorfixiert werden. Auch ist eine derartige Masse insbesondere zur Anwendung auf kleinen Flächen geeignet

Bei dem erfindungsgemäßen Verfahren wird die selbstklebende Masse auf die jeweilige Metalloberfläche aufgebracht und anschließend erwärmt. Bei der selbstklebenden Masse handelt es sich um eine derartige Masse, die durch Erwärmung aufschmilzt, sich also bei Erwärmung auf der Metalloberfläche verteilt und dabei eine geschlossene Korrosionsschutzschicht ausbildet. Dadurch, dass es sich um eine selbstklebende Masse handelt, die letztendlich die Korrosionsschutzschicht bildet, kann der Auftrag sehr einfach, insbesondere auch an Kanten und Übergängen zwischen verschiedenen Metallbauteilen erfolgen. Die Klebrigkeit dieser Masse ermöglicht eine Vorfixierung, bevor durch das Erwärmen die Korrosionsschutzschicht ausgebildet wird. Ferner kann die selbstklebende Masse auch auf kleinen Flächen gleichmäßig aufgebracht werden, was mit herkömmlichen Verfahren, wie zum Beispiel dem Aufsprühen von Lack, nur schwer und mittels weiterer Hilfsmittel, wie temporärer Schutzfolien, möglich ist.

Insbesondere hat sich gezeigt, dass bei Auswahl einer geeigneten selbstklebenden Masse die Korrosionsschutzschicht mit einer im Wesentlichen glatten Oberfläche ausgebildet wird, das heißt für einen Betrachter ist die Oberfläche der Korrosionsschutzschicht gleichmäßig und eben ausgebildet.

Als Klebmassen finden bevorzugt solche auf Basis von Blockcopolymeren Verwendung. Diese Blockcopolymere enthalten Polymerblöcke überwiegend gebildet von Vinylaromaten (A-Blöcke), bevorzugt Styrol, und Polymerblöcke überwiegend gebildet durch Polymerisation von 1,3-Dienen (B-Blöcke), bevorzugt Butadien und Isopren. Sowohl Homo- als auch Copolymerblöcke sind erfindungsgemäß nutzbar. Resultierende Blockcopolymere können gleiche oder unterschiedliche B-Blöcke enthalten, die teilweise, selektiv oder vollständig hydriert sein können. Blockcopolymere können lineare A-B-A Struktur aufweisen. Einsetzbar sind ebenfalls Blockcopolymere von radialer Gestalt sowie sternförmige und lineare Multiblockcopolymere. Als weitere Komponenten können A-B Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Besonders bevorzugt sind Klebmassen, die vernetzbar sind. Die Vernetzung erfolgt vorzugsweise als Thermische Vernetzung während des Aufschmelzens der selbstklebenden Masse. Aber auch eine Strahlvemetzung oder andere Vernetzungsverfahren sind einsetzbar. Durch die Vernetzung wird die selbstklebende Masse deutlich weniger empfindlich gegenüber hohen Temperaturen, so dass die selbstklebende Masse dann nicht mehr Aufschmelzen kann. Insbesondere die Vernetzung ermöglicht somit den Einsatz von selbstklebenden Massen, die an sich aufgrund ihrer mangelnden Temperaturstabilität nicht als produktives, also dauerhaft verbleibendes Bauteil eingesetzt werden könnten.

Die Vernetzung kann, wie beschrieben, auf unterschiedliche Arten erfolgen. Zum einen kann die Vernetzung beim oder nach dem Aufschmelzen der selbstklebenden Masse durch Strahlung geschehen sowohl über UV- als auch mit Hilfe von Elektronenstrahlen. Wie in der Literatur beschrieben lassen sich die kohäsiven Eigenschaften von Haftklebemassen auf Basis von Styrolblockcopolymeren bei hohen Temperaturen verbessern, wenn die Polymere im Elastomerteil strahlenchemisch vernetzt werden. Obwohl die meisten Styrolblockcopolymere als Elastomerblöcke Polyisopren oder Polybutadien enthalten, und somit eine große Anzahl von Doppelbindungen vorhanden ist, benötigt die Mehrheit dieser Elastomere infolge ihrer geringen Molmasse eine sehr hohe Bestrahlungsdosis für die Erzielung einer ausreichend hohen Kohäsion. Daher wurden spezielle Styrolblockcopolymere entwickelt, die besonders leicht mittels UV- oder Elektronenstrahlen vernetzt werden können. Besonders geeignet für eine Vernetzung sind Systeme, die eine sehr hohe Molmasse besitzen und /oder solche mit einem hohen Gehalt an 1,2-verknüpften dienischen Monomereinheiten im Elastomerblock enthalten. Die Fa. Kraton Polymers bietet entsprechende spezielle Polymere für eine strahlenchemische Vernetzung an, einmal das Kraton DKX 222, ein radiales (SB)₂B₂ mit im Elastomerteil enthaltenem 1,2-verknüpftem Polybutadien, und zum anderen das Kraton D 1320, ein hochmolekulares sternförmiges Styrol-Isopren-Blockcopolymer. Die Vernetzung kann im Falle der Strahlenvernetzung durch Promotoren wie gewissen Acrylaten oder Mercaptanen, siehe WO 2005/110737 verbessert werden. Bei einer UV-Vemetzung müssen Vernetzungspromotoren zugesetzt werden.

Eine Vernetzung durch thermische Energie, also beim Aufschmelzen der selbstklebenden Masse, kann z.B. durch den Einsatz von Phenolharzen oder von Schwefel und den entsprechenden Vernetzungshilfsmitteln erfolgen.

Durch den Einsatz von Vinylaromatenblockcopolymeren mit angepfropften Maleinsäureanhydridgruppen, z.B. unter dem Namen Kraton FG 1901 oder Kraton FG 1924 von der Fa. Kraton vertrieben, kann die Vernetzung auch über diese Gruppen erfolgen. Dabei können als Vernetzer zum einen Epoxidharze wie in der DE 102004007259 beschrieben, zum anderen Metallchelate, wie in DE 10361540 beschrieben, eingesetzt werden.

Eine Vernetzung von Vinylaromatenblockcopolymeren mit Epoxidgruppen, von der Fa. Daicel unter dem Namen Epofriend vertrieben, kann z.B. mit Säureanhydriden (DE 102004007258) erfolgen.

Die Haftklebemasse hat vorzugsweise einen Anteil von 20 bis 70 Gew.-% von Styrolblockcopolymer, vorzugsweise 30 bis 60 Gew.-%, und besonders bevorzugt 35 bis 55 Gew.-%.

Als Klebrigmacher nutzen erfindungsgemäß einsetzbare selbstklebende Massen als Hauptkomponente insbesondere Klebharze, die mit dem Elastomerblock der Vinylaromatenblockcopolymere verträglich sind. Bevorzugt geeignet sind u. a.: nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, Polyterpenharze auf Basis von α-Pinen und/oder β-Pinen und/oder δ-Limonen, hydrierte Polymerisate von bevorzugt reinen C-8 und C-9 Aromaten. Vorgenannte Klebharze können sowohl allein als auch im Gemisch eingesetzt werden.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockverstärkerharze
- Füllstoffe, wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.
- Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel).

Die Haftklebrigkeit der selbstklebenden Masse kann optional erst durch thermische Aktivierung oder durch Lösemittelaktivierung erzeugt werden.

Das Aufschmelzen der selbstklebenden Masse sollte erst bei mindestens 90 °C, vorzugsweise bei mindestens 110 °C, weiter vorzugsweise bei mindestens 130 °C erfolgen. Die jeweils erforderliche Mindesttemperatur wird durch die konkrete Zusammensetzung der selbstklebenden Masse bestimmt. Diese Temperatur sollte einerseits möglichst hoch gewählt sein, damit die selbstklebende Masse möglichst lagerstabil ist, zum anderen sollte die Temperatur jedoch nicht zu hoch sein, um das Aufschmelzen möglichst energieoptimiert durchführbar ist und auch weitere, beispielsweise in einer Kraftfahrzeugkarosserie eingesetzte Bauteile nicht übermäßig hohen Temperaturen ausgesetzt werden. Als Maximaltemperatur hat sich insofern eine Temperatur von maximal 200 °C, vorzugsweise von maximal 180 °C, weiter vorzugsweise von maximal 160 °C für das Aufschmelzen der selbstklebenden Masse herausgestellt.

Um zudem das Auftragen der selbstklebenden Masse so einfach wie möglich zu gestalten, sollte diese eine relativ hohe Elastizität aufweisen. Die Elastizität gibt dabei an, auf wie viel Prozent der ursprünglichen Ausdehnung die Klebermasse relaxiert, nachdem sie unter Normalbedingungen auf 200 Prozent gedehnt und anschließend wieder entspannt wurde, wobei dieser Wert nach einer halben Minute Wartezeit bestimmt wird. Insbesondere sollte die selbstklebende Masse eine Elastizität von mindestens 80 %, vorzugsweise von mindestens 100 % aufweisen.

Als selbstklebende Masse sollte zudem eine trägerfreie Klebemasse verwendet werden. Als trägerfreie Klebemasse wird eine Klebemasse bezeichnet, die keinen dauerhaften Träger, wie eine Polymerfolie oder ein Vlies, aufweist. Vielmehr ist die selbstklebende Masse in bevorzugter Ausgestaltung lediglich auf einen Liner, also ein Material, das lediglich vorübergehend zur Stützung und leichteren Auftragbarkeit der selbstklebenden Masse dient, aufgebracht. Nach dem Aufbringen der selbstklebenden Masse auf die Metalloberfläche, wird der Liner dann entfernt. Im Gegensatz zur selbstklebenden Masse stellt der Liner somit kein produktives Bauteil dar. Die dann zurückbleibende trägerfreie Klebemasse kann besonders einfach aufgeschmolzen werden, ohne dass dabei Beeinträchtigungen durch ein Trägermaterial zu erwarten sind.

Die selbstklebende Masse sollte mit einer Schichtdicke von mindestens 50 µm, vorzugsweise von mindestens 100 µm, weiter vorzugsweise von mindestens 200 µm auf die Metalloberfläche aufgebracht werden. Zudem sollte die Schichtdicke maximal 750 µm, vorzugsweise maximal 600 µm, weiter vorzugsweise maximal 400 µm betragen. Durch die Wahl einer derartigen Schichtdicke wird sichergestellt, dass einerseits die Metalloberfläche beim Aufschmelzen der selbstklebenden Masse ausreichend bedeckt wird, andererseits die Schichtdicke der Korrosionsschutzschicht nicht zu groß wird.

Prozesstechnisch vorteilhaft ist die Auswahl einer Klebmasse, die nach dem Aufschmelzen lackierbar ist, an der also Lack, wie er beispielsweise in der Automobilindustrie verwendet wird, ausreichend haftet. Bei Verwendung einer derartigen Klebmasse kann somit nach dem Aufschmelzen die Korrosionsschutzschicht selbst lackiert werden. Alternativ dazu kann eine weitere Schicht, beispielsweise in Form einer zusätzlichen Folie auf die Korrosionsschutzschicht aufgebracht werden. Diese zusätzliche Schicht kann sodann lackiert werden. Als weitere Schicht eignet sich besonders eine Polyethylenterephthalat-Folie sowie eine Polyester-Folie. Die Schichtdicke derartiger Schichten liegt bevorzugt im Bereich von etwa 20 µm bis etwa 100 µm

Insbesondere im Bereich der Automobilindustrie ist es oftmals notwendig, Korrosionsschutzschichten manuell, also von Hand, auf die Metalloberfläche aufzubringen. Dies erfolgt vorliegend, indem die selbstklebende Masse manuell auf die Metalloberfläche aufgebracht wird und anschließend ein entsprechender Wärmeprozess durchlaufen wird. Von besonderer Bedeutung ist in diesem Fall, dass die selbstklebende Masse gesundheitsunbedenklich ist, für den Werker also keine Gesundheitsgefährdung beim Handling der Klebemasse besteht. Für das Handling sind somit insbesondere auch keine weiteren Schutzmaßnahmen, wie Atemschutz, gesicherte und/oder gekühlte Lagerung oder dergleichen erforderlich.

Zur Anwendung hat es sich als besonders geeignet herausgestellt, wenn die selbstklebende Masse zunächst auf einer Rolle aufgewickelt und von dieser Rolle auf die Metalloberfläche aufgebracht wird. Der Werker kann die selbstklebende Masse dann je nach Bedarf ablängen. Um das Aufwickeln der selbstklebenden Masse auf eine Rolle zu ermöglichen, ist diese üblicherweise auf einer Seite mit einem Liner bedeckt. Durch den Liner wird ein leichtes Abrollen der selbstklebenden Masse von der Rolle ermöglicht und dadurch das Handling erleichtert.

Darüber hinaus sollte die Klebmasse nach dem Aufschmelzen eine möglichst hohe Temperaturbeständigkeit aufweisen, um möglichst vielfältige Einsatzgebiete der korrosionsschutzbehandelten Metalloberflächen zu ermöglichen. Insbesondere ist vorgesehen, dass die Klebmasse nach dem Aufschmelzen bis zu -5 °C, vorzugsweise bis zu -15 °C, weiter vorzugsweise bis zu -30 °C temperaturbeständig ist. Zudem sollte die Klebmasse nach dem Ausschmelzen auch bis zu 70 °C, vorzugsweise bis zu 80 °C, weiter vorzugsweise bis zu 100 °C temperaturbeständig sein.

Im Folgenden wird die Erfindung anhand eines Beispiels näher erläutert, ohne die Erfindung damit zu beschränken.

### Beispiel 1

Es wurde eine PowerStrip®-Masse als selbstklebende Masse, wie sie kommerziell von der Firma tesa AG erhältlich ist, mit einer Dicke von 300 µm über die Kante von zwei KTL-Metallblechen geklebt.

Anschließend wurden diese Bleche zusammen mit der selbstklebenden Masse für 40 Minuten auf ca. 170 °C erwärmt. Die Erwärmung führte zum Aufschmelzen der selbstklebenden Masse auf die Metalloberfläche, sodass sich ein Korrosionsschutzschicht ausbildete. Nach Abkühlen der Metallbleche zeigte die Korrosionsschutzschicht eine glatte Oberfläche. Dabei blieb die Blechkante zwischen den beiden Metallblechen zwar erkennbar, die Oberfläche der ursprünglichen PowerStrip®-Klebemasse war jedoch glatt und wies keine unmittelbar sichtbaren Beeinträchtigungen auf.

Anschließend wurden die Metallbleche unterschiedlichen Umgebungsbedingungen ausgesetzt. Die Temperatur wurde hierzu abwechselnd zwischen ca. -5 °C und 70 °C variiert. Die Elastizität der ursprünglichen PowerStrip®-Masse blieb dabei weitgehend erhalten, wodurch die Gefahr des Abplatzens der Korrosionsschutzschicht vermindert ist.

Zudem wurde noch ein Lackiewersuch vorgenommen, der zeigte, dass die PowerStrip®-Masse nach dem Aufschmelzen unmittelbar lackiert werden konnte.

### Beispiel 2

Als selbstklebende Masse wurde eine Masse gemäß folgender Rezeptur verwendet:

| | |
|---|---|
| 100 Teile Kraton D 1165 | (Styrol-Isopren-Styrol-Blockcopolymer mit 30% Styrolgehalt der Fa. Kraton) |
| 100 Teile Pentalyn HE | (Pentaerythritester des Kolophoniums zum Teil hydriert mit einem Erweichungspunkt nach der Ring und Kugelmethode von ca. 110°C der Fa. Eastman) |
| 5 Teile Ondina G 41 | (medizinisches Weißöl der Fa. Shell) |
| 0,5 Teile Irganox 1010 | (Phenolisches Antioxidanz der Fa. Ciba) |

Diese selbstklebende Masse wurde ebenfalls mit einer Schichtdicke von 300 µm über die Kante von zwei KTL-Metallblechen geklebt.

Anschließend wurden die Bleche zusammen mit der selbstklebenden Masse für 40 Minuten auf ca. 170 °C erwärmt. Auch hier führte die Erwärmung zum Aufschmelzen der selbstklebenden Masse auf die Metalloberfläche, sodass sich eine Korrosionsschutzschicht ausbildete. Nach Abkühlen der Metallbleche zeigte die Korrosionsschutzschicht eine glatte Oberfläche. Die Blechkante zwischen den beiden Metallblechen blieb erkennbar, die Oberfläche der ursprünglichen Klebemasse war glatt und wies keine sichtbaren Beeinträchtigungen auf.

Zum Test der Korrosionsbeständigkeit wurden die Metallbleche wieder unterschiedlichen Umgebungsbedingungen ausgesetzt. Die Temperatur wurde abwechselnd zwischen ca. -5 °C und 70 °C variiert. Es zeigte sich auch hier nach mehreren Temperaturzyklen keine Beeinträchtigung in der Qualität der Korrosionsschutzschicht.

## Patentansprüche

1. Verfahren zur Korrosionsschutzbehandlung von Metalloberflächen, insbesondere an Kanten und Übergängen der Metallbauteile,
**dadurch gekennzeichnet,**
**dass** auf die Metalloberfläche eine selbstklebende Masse aufgebracht wird und dass die selbstklebende Masse derart erwärmt wird, dass die selbstklebende Masse auf die Metalloberfläche aufgeschmolzen und so eine Korrosionsschutzschicht bildet.

2. Verfahren nach Anspruch 1, **dadurch gekennzeichnet,**
**dass** die selbstklebende Masse beim Aufschmelzen eine im Wesentlichen glatte Oberfläche ausbildet.

3. Verfahren nach einem der vorhergehenden Ansprüche, **dadurch gekennzeichnet,**
**dass** als selbstklebende Masse eine Klebmasse auf Basis von Blockcopolymeren verwendet wird.

4. Verfahren nach einem der vorhergehenden Ansprüche, **dadurch gekennzeichnet,**
**dass** die selbstklebende Masse vernetzt wird, insbesondere dass die selbstklebende Masse thermisch und/oder durch UV-Bestrahlung und/oder mittels Elektronenstrahlen vernetzt wird.

5. Verfahren nach einem der vorhergehenden Ansprüche, **dadurch gekennzeichnet.**
**dass** als selbstklebende Masse eine Klebmasse mit einem Anteil von 20 bis 70 Gew.-%, vorzugsweise von 30 bis 60 Gew-%, weiter vorzugsweise von 35 bis 55 Gew.-% Styrolblockcopolymer bezogen auf die gesamte Klebmasse verwendet wird.

6. Verfahren nach einem der vorhergehenden Ansprüche, **dadurch gekennzeichnet,**
**dass** als selbstklebende Masse eine Klebmasse mit einem Klebharze als Hauptkomponente aufweisenden Klebrigmacher verwendet wird.

7. Verfahren nach einem der vorhergehenden Ansprüche, **dadurch gekennzeichnet,**
**dass** die selbstklebende Masse bei mindestens 90°C, vorzugsweise bei mindestens 110°C, weiter vorzugsweise bei mindestens 130°C aufgeschmolzen wird.

8. Verfahren nach einem der vorhergehenden Ansprüche, **dadurch gekennzeichnet,**
**dass** die selbstklebende Masse bei maximal 200°C, vorzugsweise bei maximal 180°C, weiter vorzugsweise bei maximal 160°C aufgeschmolzen wird.

9. Verfahren nach einem der vorhergehenden Ansprüche, **dadurch gekennzeichnet,**
**dass** als selbstklebende Masse eine Klebemasse mit einer Elastizität von mindestens 80%, vorzugsweise von mindestens 100% verwendet wird.

10. Verfahren nach einem der vorhergehenden Ansprüche, **dadurch gekennzeichnet,**
**dass** als selbstklebende Masse eine trägerfreie Klebemasse verwendet wird.

11. Verfahren nach einem der vorhergehenden Ansprüche, **dadurch gekennzeichnet,**
**dass** als selbstklebende Masse eine Klebemasse mit einer Schichtdicke von mindestens 50 µm, vorzugsweise von mindestens 100 µm, weiter vorzugsweise von mindestens 200 µm und/oder von höchstens 750 µm, vorzugsweise von höchstens 600 µm, weiter vorzugsweise von höchstens 400 µm aufgebracht wird.

12. Verfahren nach einem der vorhergehenden Ansprüche, **dadurch gekennzeichnet,**
**dass** nach dem Aufschmelzen die Korrosionsschutzschicht selbst lackiert wird oder dass auf die Korrosionsschutzschicht eine weitere lackierbare Schicht aufgebracht wird und diese anschließend lackiert wird.

13. Verfahren nach einem der vorhergehenden Ansprüche, **dadurch gekennzeichnet,**
**dass** die selbstklebende Masse manuell auf die Metalloberfläche aufgebracht wird.

14. Verfahren nach einem der vorhergehenden Ansprüche, **dadurch gekennzeichnet,**
**dass** als selbstklebende Masse eine gesundheitsunbedenkliche Klebmasse auf die Metalloberfläche aufgebracht wird.

15. Verfahren nach einem der vorhergehenden Ansprüche, **dadurch gekennzeichnet,**
**dass** die selbstklebende Masse von einer Rolle auf die Metalloberfläche aufgebracht und nach Bedarf abgelängt wird.

## Claims

1. Process for the corrosion protection treatment of metal surfaces, particularly at edges and transitions of the metal components,
**characterized**
**in that** a self-adhesive composition is applied to the metal surface and in that the self-adhesive composition is heated such that the self-adhesive composition is melted onto the metal surface and so forms a corrosion protection layer.

2. Process according to Claim 1, **characterized in that** the self-adhesive composition, on melting, forms a substantially smooth surface.

3. Process according to either of the preceding claims, **characterized in that** use is made as self-adhesive composition of an adhesive based on block copolymers.

4. Process according to any of the preceding claims, **characterized in that** the self-adhesive composition is crosslinked, more particularly **in that** the self-adhesive composition is crosslinked thermally and/or by UV irradiation and/or by means of electron beams.

5. Process according to any of the preceding claims, **characterized in that** use is made as self-adhesive composition of an adhesive having a fraction of 20% to 70% by weight, preferably of 30% to 60% by weight, more preferably of 35% to 55% by weight of styrene block copolymer, based on the total adhesive.

6. Process according to any of the preceding claims, **characterized in that** use is made as self-adhesive composition of an adhesive with a tackifier comprising tackifying resins as principal component.

7. Process according to any of the preceding claims, **characterized in that** the self-adhesive composition is melted at not less than 90°C, preferably at not less than 110°C, more preferably at not less than 130°C.

8. Process according to any of the preceding claims, **characterized in that** the self-adhesive composition is melted at not more than 200°C, preferably at not more than 180°C, more preferably at not more than 160°C.

9. Process according to any of the preceding claims, **characterized in that** use is made as self-adhesive composition of an adhesive having an elasticity of at least 80%, preferably of at least 100%.

10. Process according to any of the preceding claims, **characterized in that** use is made as self-adhesive composition of a carrier-free adhesive.

11. Process according to any of the preceding claims, **characterized in that** application takes place as self-adhesive composition of an adhesive having a layer thickness of at least 50 µm, preferably of at least 100 µm, more preferably of at least 200 µm and/or of not more than 750 µm, preferably of not more than 600 µm, more preferably of not more than 400 µm.

12. Process according to any of the preceding claims, **characterized in that** the corrosion protection layer itself is coated after the melting operation or **in that** a further coatable layer is applied to the corrosion protection layer and said further layer is then coated.

13. Process according to any of the preceding claims, **characterized in that** the self-adhesive composition is applied manually to the metal surface.

14. Process according to any of the preceding claims, **characterized in that** application takes place to the metal surface as self-adhesive composition of an adhesive unaffected by health concerns.

15. Process according to any of the preceding claims, **characterized in that** the self-adhesive composition is applied to the metal surface from a roll, from which a length is removed in accordance with requirements.

## Revendications

1. Procédé de traitement anticorrosion de surfaces métalliques, notamment sur les bords et les jonctions de composants métalliques,
**caractérisé en ce qu'**une matière autoadhésive est appliquée sur la surface métallique et **en ce que** la matière autoadhésive est chauffée de manière à ce que la matière autoadhésive fonde sur la surface métallique et forme ainsi une couche anticorrosion.

2. Procédé selon la revendication 1, **caractérisé en ce que** la matière autoadhésive forme lors de la fusion une surface essentiellement lisse.

3. Procédé selon l'une quelconque des revendications précédentes, **caractérisé en ce qu'**une matière adhésive à base de copolymères séquencés est utilisée en tant que matière autoadhésive.

4. Procédé selon l'une quelconque des revendications précédentes, **caractérisé en ce que** la matière autoadhésive est réticulée, notamment **en ce que** la matière autoadhésive est réticulée thermiquement et/ou par un rayonnement UV et/ou par des faisceaux d'électrons.

5. Procédé selon l'une quelconque des revendications précédentes, **caractérisé en ce qu'**une matière adhésive contenant une proportion de 20 à 70 % en poids, de préférence de 30 à 60 % en poids, de manière davantage préférée de 35 à 55 % en poids, d'un copolymère séquencé de styrène, par rapport à l'ensemble de la matière adhésive, est utilisée en tant que matière autoadhésive.

6. Procédé selon l'une quelconque des revendications précédentes, **caractérisé en ce qu'**une matière adhésive contenant un agent collant comprenant une résine adhésive en tant que composant principal est utilisée en tant que matière autoadhésive.

7. Procédé selon l'une quelconque des revendications précédentes, **caractérisé en ce que** la matière autoadhésive est fondue à au moins 90 °C, de préférence à au moins 110 °C, de manière davantage préférée à au moins 130 °C.

8. Procédé selon l'une quelconque des revendications précédentes, **caractérisé en ce que** la matière autoadhésive est fondue à au plus 200 °C, de préférence à au plus 180 °C, de manière davantage préférée à au plus 160 °C.

9. Procédé selon l'une quelconque des revendications précédentes, **caractérisé en ce qu'**une matière adhésive présentant une élasticité d'au moins 80 %, de préférence d'au moins 100 %, est utilisée en tant que matière autoadhésive.

10. Procédé selon l'une quelconque des revendications précédentes, **caractérisé en ce qu'**une matière adhésive sans support est utilisée en tant que matière autoadhésive.

11. Procédé selon l'une quelconque des revendications précédentes, **caractérisé en ce qu'**une matière adhésive présentant une épaisseur de couche d'au moins 50 µm, de préférence d'au moins 100 µm, de manière davantage préférée d'au moins 200 µm et/ou d'au plus 750 µm, de préférence d'au plus 600 µm, de manière davantage préférée d'au plus 400 µm, est appliquée en tant que matière autoadhésive.

12. Procédé selon l'une quelconque des revendications précédentes, **caractérisé en ce que** la couche anticorrosion elle-même est laquée après la fusion ou **en ce qu'**une couche laquable supplémentaire est appliquée sur la couche anticorrosion, puis celle-ci est laquée.

13. Procédé selon l'une quelconque des revendications précédentes, **caractérisé en ce que** la matière autoadhésive est appliquée manuellement sur la surface métallique.

14. Procédé selon l'une quelconque des revendications précédentes, **caractérisé en ce qu'**une matière adhésive sans risque pour la santé est appliquée sur la surface métallique en tant que matière autoadhésive.

15. Procédé selon l'une quelconque des revendications précédentes, **caractérisé en ce que** la matière autoadhésive est appliquée sur la surface métallique à partir d'un rouleau et découpée en longueur au besoin.
